# EUROPEAN PATENT SPECIFICATION

(11) **EP 4 124 747 B1**
(45) Date of publication and mention of the grant of the patent: **21.05.2025**
(21) Application number: 21020387.3
(22) Date of filing: 26.07.2021
(51) Int. Cl.: F03D 9/25, F03D 80/60, F03D 1/02, F03D 1/04

(54) **WIND TURBINE COMPRISING A FAIRING**
WINDKRAFTANLAGE MIT EINER VERKLEIDUNG
EOLIENNE COMPRENANT UN CARÉNAGE

(43) Date of publication of application: 01.02.2023
(73) Proprietor: Barbeito-Taboada, Fernando, 08028 Barcelona (ES); Ureña-Maggi, Julio, 08028 Barcelona (ES)
(72) Inventor: Barbeito-Taboada, Fernando, 08028 Barcelona (ES); Ureña-Maggi, Julio, 08028 Barcelona (ES)
(74) Representative: TRBL Intellectual Property

(56) References cited:
- WO-A1-2014/167269
- WO-A2-2011/002979
- US-A- 5 505 587
- US-A1- 2010 237 620

## Description

The inventors of this Fully Faired Wind Turbine (TECC), we are Senior Civil Engineers with extensive professional experience in the fields of hydraulic, energy, environmental, transport, urban engineering and complementing it with knowledge of Structures and Geotechnics. Motivated by the current environmental problems and the need to have low-cost, sustainable and environmentally friendly energies, we have studied the design of an electricity generation system that includes these conditions.

Currently, the most common wind turbines are colloquially known as mills. These are exposed rotor wind turbines made up of large diameter blades and installed at a high altitude and have installation, maintenance and operation problems due to these extreme conditions, although their power generation performance is high. The large dimensions of the blades made the blades themselves suffer huge stress due to first and second order stresses, being, therefore, very expensive to install and operate.. They also require a large occupation of land, high accessibility needs both for the operating personnel and for the lines of transmission of energy generated. Due to its dimensions, the TECC does not require a a great installation height, nor does it require a large-area service for auxiliary facilities and services. Being built with few elements, made with lightweight materials, the cost of manufacturing, transportation, installation and maintenance are much lower than conventional wind turbines.

Exposed rotor wind turbines in high altitude wind turbine installations have environmental drawbacks, high visual impact and incidents with fauna.

The circumferential speed at the end of the blades can exceed 120 km/h, so the birds do not detect the presence of these blades and suffer impact injuries. The low-frequency noise produced by the blades when rotating causes stress on the surrounding fauna and interference with meteorological radars. The dimensions of the TECC minimize aesthetic environmental contamination. The grid incorporated into the inlet section of the TECC avoids the death by impact of birds. The fully faired wind turbine (TECC) reduces the noise level generated and reduces the stress of fauna due to low frequency noise, as well as interference with meteorological radars.

The current wind turbines are made up of three essential components: the blades that transform the action of the wind into a rotating movement around the axis, the electric generator itself and the transmission - reducer / multiplier - that links the two previous components. With this usual configuration of wind turbines there are three types of decrease in energy efficiency associated to the rotary movement itself, each of them associated with the aforementioned components. In the TECC, at the end of each of the rotor blades there is a permanent magnetic element, so that the wind rotor also acts as the magnetic rotor of the electric generator. This eliminates the mechanical transmission that links the rotary movement of the rotor shaft with a generator external to the turbine, thus eliminating the energy losses of the transmission. The set "perimeter fixed winding" - "magnetic rotor" constitutes the electric generator itself. Eventually the wind rotor could have an electrical winding similar to that of the stator, including an electrical device that activates the electromagnetism of the rotor by itself.

One of the biggest problems with these exposed rotor wind turbines is the potential runaway that occurs in strong wind conditions, which can have disastrous effects on the whole. In these incident wind conditions above its functional limit, the wind turbines must brake and stop completely. The TECC has discharge valves (waste gate) that allow to control and limit the rotational speed of the rotor.

The small number of pieces that make up the TECC and the materials used to manufacture it make it extremely light. This characteristic allows, on the one hand, that the orientation in the direction and sense of the prevailing wind is carried out at low wind speeds, and on the other hand, the low weight that gravitates on the bearings and on the rest of the properly mechanical elements makes maintenance works. They can be programmed less frequently than most of today's wind turbines require.

The applicant of the present invention is unaware of the existence of previous wind turbine equipment that satisfactorily solves the limitations of the aforementioned background.

Documents WO2014/167269 A1 and WO2011/002979 A2 show prior art wind turbines comprising a fairing.

### DESCRIPTION OF THE INVENTION.

The invention is defined by the appended set of claims, a wind turbine according to independent claim 1 is disclosed.

The TECC is a fully faired wind turbine for generating electrical energy, that is, with the rotor hidden or protected by a casing, differentiated from wind turbines with the rotor exposed.

The turbine fairing is longer than 1.32 times the diameter of the inlet section of the turbine rotor. The diameter of the rotor will be smaller than the diameter of the wind inlet section to the turbine. The absolute dimensions of the turbine will be determined by the electrical power to be generated. The total length can be less than one meter or more than several meters. The main fairing of the turbine - the one with the smallest diameter and closest to the rotor - has an axis of symmetry that coincides with the axis of rotation of the rotor itself.

Around the main fairing, there are several wraparound supplementary fairings that allow to direct the air from the inlet section to the final section (the one that goes from the rotor plane to the turbine outlet section) of the main fairing. Each of these fairings has its axis of symmetry coinciding with the axis of rotation of the rotor. Three possible scenarios are presented, one called R for the proximity of the outlets of the supplementary enveloping ducts to the rotor, another called F for the situation of the outlets of the supplementary enveloping ducts along the final section and, finally, the one called S due to the location of the outlets of the supplementary enveloping ducts close to the outlet section. See graphic documentation.

The air velocity at the exit of these supplementary enveloping ducts can be modulated by varying the interior section of each duct formed by the walls of the fairings.

The output air speed from these supplementary enveloping ducts, as well as their orientation, causes a Venturi effect on the air coming from the rotor and modifies the presence and quantity of vortices in the environment of the outlet section. Venting the air through the rear of these supplemental wraparound ducts improves the energy efficiency of the fully faired wind turbine.

The minimum number of wraparound supplementary fairings around the main fairings will be 1, and this may be up to n. These supplementary wraparound fairings define the supplemental wraparound ducts, their number being up to n. The supplementary enveloping duct number 1 is determined by the section existing between the outer surface of the main fairing and the inner surface of the supplementary enveloping fairing number 1. The definition of the generating curve of the main fairing, as well as the definition of the generating curves of the rest of supplementary fairings is yₙ = fₙ(x), where fₙ(x) is a function that can contain algebraic functions up to degree n, trigonometric functions, logarithmic functions, hyperbolic functions, etc ...

Depending on the geometry of the supplementary enveloping ducts and the diameter of the rotor, the rear outlet of air from the supplementary enveloping ducts may be inside the final section of the main duct before the outlet section, or coplanar to the section of outlet of the main conduit itself.

The inlet section has a metal grid attached on the outside. This front grill allows to prevent damage to birds, which is one of the problems that current wind turbines present. In this way, the impact on the local fauna is minimized.

The inner rotor, responsible for converting the axial force of the wind that affects perpendicularly on it into a rotary movement, has a number of blades depending on its design in accordance with the aerodynamics of the set, the minimum number of blades will be 2, and the number maximum k. In the same way, the shape of the blades depends on the aerodynamics, which in turn depends on the possibility of generating electrical energy based on the wind available in the intended location. The number of blades and the definition of their geometric profile depends on the aerodynamics and the power of the electromagnetic generator.

Around the rotor, in its main plane and embedded in the inner section of the duct formed by the main fairing and the first supplementary enveloping fairing, is the electrical winding that constitutes the stator of the electrical generator. This winding, being discontinuous, occupies partial sections of the circumference around the rotor. Its dimensions depend on the electrical power determined for each type of turbine.

The configuration of the electromagnetic winding is discontinuous, so its location in the first supplementary conduit that surrounds the main fairing guarantees correct ventilation.

At the end of each of the rotor blades there is a permanent magnetic element, so that the wind rotor also acts as the magnetic rotor of the electric generator. This allows to eliminate the mechanical transmission that links the rotary movement of the rotor shaft with a generator external to the turbine. The set "perimeter fixed winding" - "magnetic rotor" constitutes the electric generator itself.

With this configuration, the rotor is both an aerodynamic rotor that takes advantage of the force of the wind to rotate, and a magnetic rotor that is part of an electrical generator. The dimensions and number of these magnetic elements depend on the design electrical power. The number of rotor blades is also conditioned by the magnetic configuration.

Eventually the wind rotor could have an electrical winding similar to that of the stator, including an electrical device that activates the electromagnetism of the rotor itself.

In addition to the generator formed by the rotor itself plus the outer winding incorporated into the main casing, the rotor shaft is connected to a transmission that carries the rotary movement to a shaft, commonly called a power take-off, to which any mechanical equipment can be coupled in case it is required.

The fully faired wind turbine has discharge valves (waste gate) that work as an aerodynamic brake that are activated to control the pressure inside the main duct, thus limiting the rotational speed of the rotor. The existence of this pressure limiting mechanism inside the turbine allows, on the one hand, to control the rotational speed of the rotor, avoiding eventual breakdowns, and on the other, it allows the rotor to operate near its maximum permissible rotational limit (rpm). in extreme wind conditions. This prevents runaway, while the rotor continues generating electrical power. Likewise, this configuration allows the generation of electrical energy at very low wind intensity, reducing inactivity times.

The fully faired wind turbine has a support in its lower part to anchor it to a permanent element. The connection between the support and the turbine is made through a vertical axis that allows the wind equipment to rotate 360° with respect to said axis. Likewise, in the upper rear part of the external fairing, it has a rudder for its correct orientation in the horizontal plane for optimal use of the wind force.

### DESCRIPTION OF THE FIGURES

Attached three descriptive figures of the fully wind turbine are included .

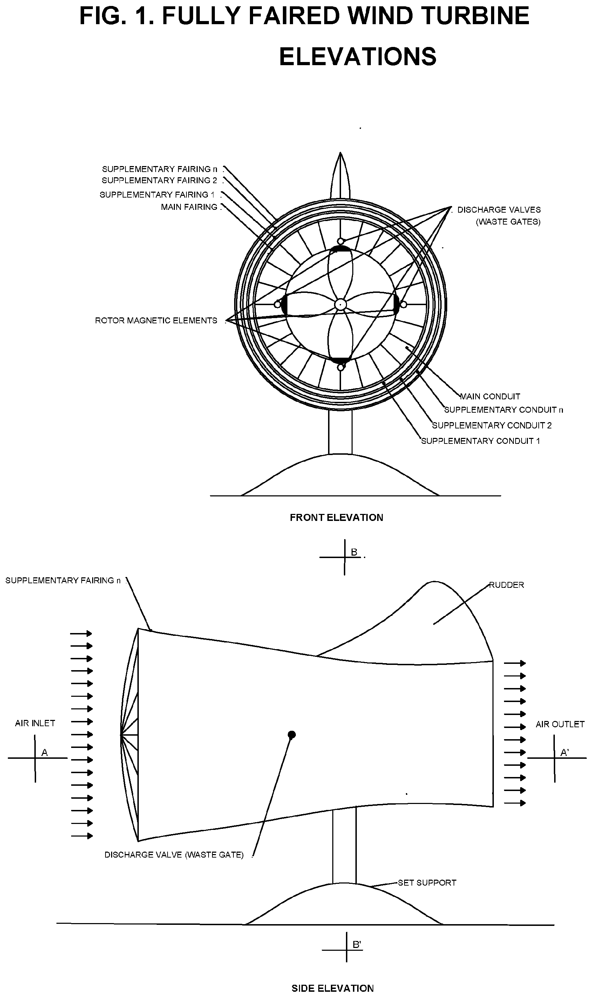

Figure 1, FULLY FAIRED WIND TURBINE. ELEVATIONS., Describes the front elevation and the side elevation.

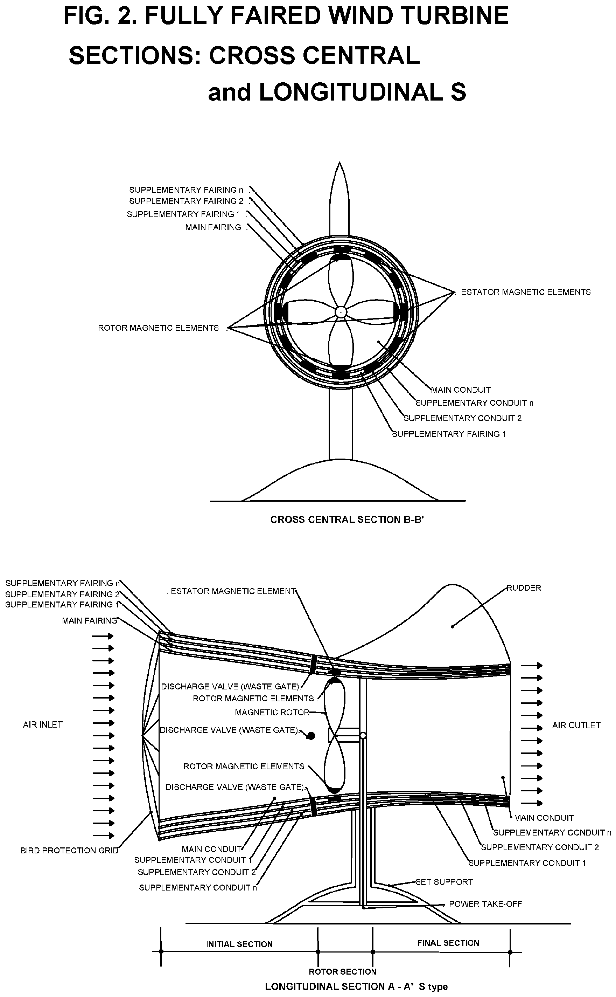

Figure 2, FULLY FAIRED WIND TURBINE. SECTIONS: TRANSVERSAL CENTRAL CROSS AND LONGITUDINAL S., describes the central longitudinal transverse section, corresponding to the vertical plane that passes through the rotor axis in the discharge situation of the supplementary enveloping ducts in the vicinity of the final section and the central cross section that passes through the plane of the rotor (the stator winding can be seen).

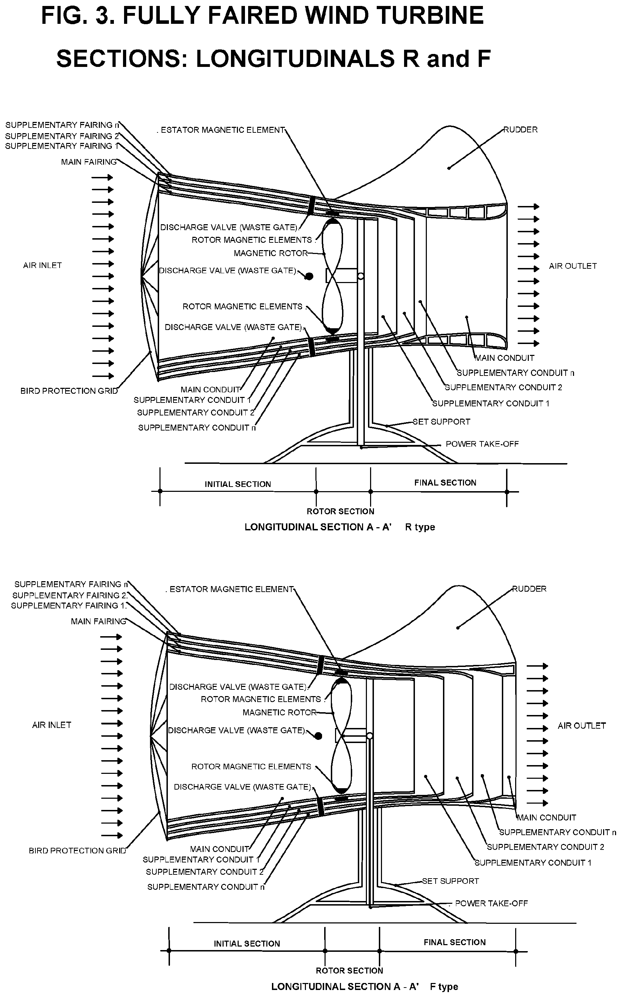

Figure 3, FULLY FAIRED WIND TURBINE. SECTIONS: LONGITUDINAL R AND F., describes the central longitudinal transverse section, corresponding to the vertical plane that passes through the rotor axis in the discharge situation of the supplementary enveloping ducts in the environment of the final section (F) and in the environment of the rotor (R)

They are descriptive drawings complementary to the descriptions that have been made in the present document. The names of the relevant elements that make up the TECC are included in each of the figure drawings.

The number of magnetic elements in the fully faired wind turbine is determined by analyzing the geographical location and the maximum electrical power generated. In the figures it is represented a number only for descriptive purposes.

The main and auxiliary elements of the fully faired wind turbine and the materials that compose them are:
- Main structure including support. It can be metallic (steel, aluminum, ...) or made of plastic or composite materials, depending on its size.
- Main fairing and wrap-around supplementary fairing. They can be made of plastic or composite material, or of aluminum.
- Other auxiliary equipment (discharge valves, shafts, transmission, etc ...) already exist in the industrial market.

Both the main fairing and the wraparound supplementary fairings are preferably made of polyester reinforced with reinforced fiberglass and highly durable and hard resins. This material presents high performance in its operation and reduces the cost of maintenance.

The small number of parts that make up a fully faired wind turbine and the materials used for its manufacture make it extremely light.

## Claims

1. Wind turbine comprising
a rotor comprising a plurality of rotor blades, each rotor blade comprising a tip with a magnetic element arranged in the tip;
a main fairing having a circular symmetry around a longitudinal axis, wherein the cross section of the main fairing has a diameter which varies along the longitudinal axis from a main inlet section to a main outlet section;
a protective grid arranged at the main inlet section;
at least a first supplementary fairing arranged around the main fairing and concentric with the main fairing, wherein each supplementary fairing has a fairing length, wherein one of the supplementary fairings is the outer fairing, wherein the fairing length of the outer fairing is the total length, and wherein the fairing length of each supplementary fairing is equal or greater than the length of the main fairing and equal or lower than the total length, and wherein the total length is greater than 1.32 times the main inlet section;
an electrically conductive winding arranged between the exterior surface of the main fairing and the interior surface of the first supplementary fairing, the electrically conductive winding being discontinuous, thus allowing air passing through the space between the exterior surface of the main fairing and the interior surface of the first supplementary fairing;
a plurality of discharge valves arranged upstream the rotor, each discharge valve providing a fluid communication between the flow in the main fairing and the outer surface of the last supplementary fairing.

2. Wind turbine according to claim 1, wherein the magnetic element is a permanent magnet.

3. Wind turbine according to claim 1, wherein the magnetic element comprises an electrical winding and an electrical device configured to activate the electrical winding to cause an electromagnetic field.

4. Wind turbine according to any of the preceding claims, further comprising more supplementary fairings, successively arranged around the first supplementary fairing and having circular symmetry with respect to the longitudinal axis, wherein two consecutive supplementary fairings define a supplementary conduit between them.

5. Wind turbine according to any of the preceding claims, wherein the rotor is connected to a shaft, so that the rotatory movement of the rotor is transmitted to the shaft.

6. Wind turbine according to any of the preceding claims, further comprising a rudder arranged on the outer surface of the last supplementary fairing.

## Patentansprüche

1. Windturbine, bestehend aus:
Einem Rotor, der eine Vielzahl von Rotorblättern umfasst, bei der jedes Rotorblatt eine Spitze mit einem an der Spitze angeordneten magnetischen Element aufweist;
Einer Hauptverkleidung, die eine kreisförmige Symmetrie um eine Längsachse aufweist, bei der der Querschnitt der Hauptverkleidung einen Durchmesser aufweist, der entlang der Längsachse von einem Einlass-Hauptabschnitt zu einem Auslass-Hauptabschnitt variiert;
Einem Schutzgitter, das am Haupteinlassabschnitt angeordnet ist;
Mindestens einer ersten Zusatzverkleidung, die um die Hauptverkleidung herum angeordnet und konzentrisch mit der Hauptverkleidung ist - jede Zusatzverkleidung weißt eine Verkleidungslänge auf, wobei eine der Zusatzverkleidungen die Außenverkleidung ist und die Verkleidungslänge der Außenverkleidung die Gesamtlänge ist; die Verkleidungslänge jeder Zusatzverkleidung ist gleich oder größer als die Länge der Hauptverkleidung und gleich oder kleiner als die Gesamtlänge, und die Gesamtlänge ist größer als das 1,32-fache des Haupteinlassabschnitts;
Einer elektrisch leitenden Wicklung, die zwischen der Außenfläche der Hauptverkleidung und der Innenfläche der ersten Zusatzverkleidung angeordnet ist, bei der die elektrisch leitende Wicklung diskontinuierlich ist, so dass Luft durch den Raum zwischen der Außenfläche der Hauptverkleidung und der Innenfläche der ersten Zusatzverkleidung strömen kann;
Einer Vielzahl von Auslassventilen, die stromaufwärts des Rotors angeordnet sind, bei der jedes Auslassventil eine nahtlose Verbindung zwischen der Strömung in der Hauptverkleidung und der Außenfläche der letzten Zusatzverkleidung herstellt.

2. Windturbine nach Anspruch 1, **gekennzeichnet dadurch, dass** das magnetische Element ein Permanentmagnet ist.

3. Windturbine nach Anspruch 1, **gekennzeichnet dadurch, dass** das magnetische Element eine elektrische Wicklung und eine elektrische Vorrichtung umfasst, die so konfiguriert ist, dass sie die elektrische Wicklung aktiviert, um ein elektromagnetisches Feld zu erzeugen.

4. Windturbine nach einem der vorhergehenden Ansprüche, die außerdem mehrere Zusatzverkleidungen umfasst, die nacheinander um die erste Zusatzverkleidung angeordnet sind und eine kreisförmige Symmetrie in Bezug auf die Längsachse aufweisen, bei der zwei aufeinanderfolgende Zusatzverkleidungen einen zusätzlichen Kanal zwischen sich definieren.

5. Windturbine nach einem der vorhergehenden Ansprüche, bei der der Rotor mit einer Welle verbunden ist, so dass die Drehbewegung des Rotors auf die Welle übertragen wird.

6. Windturbine nach einem der vorhergehenden Ansprüche, die außerdem ein an der Außenfläche der letzten Zusatzverkleidung angeordnetes Ruder umfasst.

## Revendications

1. Eolienne comprenant :
Un rotor comprenant plusieurs pales de rotor. Chaque pale de rotor comprenant une pointe avec un élément magnétique disposé sur la pointe.
Un carénage principal avec une symétrie circulaire autour d'un axe longitudinal, dans laquelle la section principale du carénage principal dispose d'un diamètre qui varie tout le long de l'axe longitudinale d'une section d'entrée a une section principale de sortie.
Une grille de protection disposé au niveau de la section principale d'entrée
Au moins un premier carénage supplémentaire disposée autour du carénage principale et concentrique avec le carénage principal ou chaque carénage supplémentaire présente une longueur de carénage ou la longueur de carénage extérieur est la longueur totale, et la longueur de carénage de chaque carénage supplémentaire est égale ou majeur que la longueur du carénage principale et égal ou mineur longueur totale, et on la longueur totale et majeur que 1,32 fois la section principale d'entrée.
Un enroulement électrique conducteur, disposé entre la surface extérieure du carénage principale, et la surface intérieure du premier carénage supplémentaire. L'enroulement supplémentaire du conducteur électrique sera discontinu, permettant aussi l'air de circuler pour l'espace entre la surface extérieure de carénage principale et la surface intérieure du premier carénage supplémentaire.
Plusieurs vannes de décharge disposée en amont du rotor. Chaque vanne de décharge assurant une communication fluide entre l'écoulement dans le carénage principal et la surface extérieure du dernier carénage supplémentaire.

2. Eolienne selon la revendication numéro 1, dans laquelle l'élément magnétique est un aimant permanent.

3. Eolienne selon la revendication numéro 1, caractérise per que l'élément magnétique comprend un enroulement électrique et un dispositif électrique configure pour activer l'enroulement électrique et provoquer un champ électromagnétique.

4. Eolienne selon une quelconque des revendications précédentes, comprenant davantage de carénages supplémentaires, disposés successivement autour du premier carénage supplémentaire et présentant une symétrie circulaire par rapport a l'axe longitudinale, ou deux carénages supplémentaires consécutifs définissent un conduit supplémentaire entre eux.

5. Eolienne selon une quelconque des revendications précédentes, dans laquelle le rotor est relié a un axe, de sorte que le mouvement rotatif du rotor est transmis a cet axe.

6. Eolienne selon une quelconque des revendications précédentes, comprenant en plus un gouvernail disposé sur la surface extérieure du dernier carénage supplémentaire.
